# EUROPÄISCHE PATENTSCHRIFT

(11) **EP 3 008 636 B1**
(45) Veröffentlichungstag und Bekanntmachung des Hinweises auf die Patenterteilung: **19.08.2020**
(21) Anmeldenummer: 14730778.9
(22) Anmeldetag: 28.05.2014
(51) Int. Cl.: G01S 19/14, G08G 1/16, G06T 7/70

(54) **VERFAHREN UND SYSTEM ZUM AUFFINDEN EINER ODER MEHRERER PERSONEN DURCH EIN FAHRZEUG**
METHOD AND SYSTEM FOR THE DETECTION OF ONE OR MORE PERSONS BY A VEHICLE
PROCÉDÉ ET SYSTÈME DE DÉTECTION, PAR UN VÉHICULE, D'UNE OU DE PLUSIEURS PERSONNES

(30) Priorität: 13.06.2013 DE 102013211028
(43) Veröffentlichungstag der Anmeldung: 20.04.2016
(73) Patentinhaber: Robert Bosch GmbH, 70442 Stuttgart (DE)
(72) Erfinder: NIEM, Wolfgang, 31141 Hildesheim (DE); ABRAHAM, Steffen, 31134 Hildesheim (DE); SIMON, Stephan, 31079 Sibbesse (DE); WINGBERMUEHLE, Jochen, 30559 Hannover (DE); DE BOER, Gerrit, 31137 Hildesheim (DE)
(86) Internationale Anmeldenummer: PCT/EP2014/061127
(87) Internationale Veröffentlichungsnummer: WO 2014/198548

(56) Entgegenhaltungen:
- EP-A1- 1 231 479
- EP-A1- 1 262 213
- DE-A1- 10 353 347
- US-A1- 2009 083 275

## Beschreibung

Die vorliegende Erfindung betrifft ein Verfahren und ein System zum Auffinden einer oder mehrerer Personen durch ein Fahrzeug.

### Stand der Technik

Das Bilden von Fahrgemeinschaften kann eine sinnvolle Alternative zum Benutzen jeweils eines eigenen Fahrzeugs sein. Potentielle Fahrer und Mitfahrer können sich bei Mitfahrzentralen anmelden und Angaben zu geplanten oder gewünschten Reisen machen. Mitfahrzentralen unterhalten Datenbanken mit allen Reiseangaben wie Abfahrtsort, Abfahrtszeit, Autotyp usw. und vermitteln potentielle Mitfahrer an Fahrer bzw. Fahrer an Mitfahrer.

Bei dem so genannten "Dynamic Ridesharing" ist es möglich, spontane Fahrgemeinschaften zu vermitteln, deren Teilnehmer bereits im Straßenverkehr unterwegs sind, sei es als Fahrer oder Fußgänger. Der Treffpunkt wird dabei üblicherweise adressgenau vermittelt. Dabei kann eine gewisse Unsicherheit bestehen, beispielsweise wenn die Adresse des Treffpunktes nicht eindeutig referenziert oder räumlich ausgedehnt ist, wie es etwa bei einem Parkplatz oder einer Kreuzung der Fall ist, oder wenn sich weitere Personen am Treffpunkt befinden.

In der EP1531342 B1 ist ein Verfahren zum Erkennen von Fußgängern im Straßenverkehr beschrieben, welches die Tatsache nutzt, dass eine Gehbewegung eines Fußgängers eine periodische Bewegung ist. So kann ein Fahrzeugführer informiert werden, dass sich Fußgänger in der Umgebung seines Fahrzeugs befinden.

In EP1 262 213 A1 ist ein Verfahren zur Ortung eines Gegenstands, einer Person und/oder eines Teiles davon durch einen Benutzer offenbart.

In EP 1 231 479 A1 ist ein Sicherheitssystem beschrieben, mit welchem Personen, die im Umkreis von Maschinen arbeiten, aufgefunden werden können.

### Offenbarung der Erfindung

Die Erfindung schafft ein Verfahren nach Anspruch 1 und ein entsprechendes System nach Anspruch 9.

Das erfindungsgemäße Verfahren weist dabei die Verfahrensschritten auf: Mindestens einmaliges Bestimmen einer Position einer aufzufindenden Person und Festlegen einer Nahzone um diese Position, wobei die Nahzone zumindest durch einen vorbestimmten Maximalabstand von dieser Position definiert wird; Fortlaufendes Bestimmen einer aktuellen Position des Fahrzeugs; Automatisches fortlaufendes Aufnehmen von Bilddaten, welche eine Umgebung des Fahrzeugs abbilden, während die aktuelle Position des Fahrzeugs innerhalb derjenigen Nahzone, welche zuletzt festgelegt wurde, bestimmt wird; Mindestens einmaliges Bestimmen eines Raumwinkels, welcher von der aktuellen Position des Fahrzeugs ausgehend diejenige Position der aufzufindenden Person umfasst, welche zuletzt bestimmt wurde; Erfassen von Personen in dem Raumwinkel, welcher zuletzt bestimmt wurde, in den aufgenommenen Bilddaten; Auffinden der aufzufindenden Person unter den erfassten Personen mittels einer Plausibilisierungsoperation.

Das erfindungsgemäße System umfasst: eine erste Positionsbestimmungseinrichtung, welche dazu ausgebildet ist, eine Position einer aufzufindenden Person zu bestimmen; eine zweiten Positionsbestimmungseinrichtung, welche dazu ausgebildet ist, fortlaufend eine aktuelle Position des Fahrzeugs zu bestimmen; eine Recheneinrichtung, welche dazu ausgebildet ist, eine Nahzone um die Position der aufzufindenden Person festzulegen, wobei die Nahzone zumindest durch einen vorbestimmten Maximalabstand von der Position der aufzufindenden Person definiert wird, und einen Raumwinkel zu bestimmen, welcher ausgehend von der aktuellen Position des Fahrzeugs die zuletzt bestimmte Position der aufzufindenden Person umfasst; eine Übermittlungseinrichtung, welche dazu ausgebildet ist, die bestimmte Position der aufzufindenden Person an die Recheneinrichtung zu übermitteln; eine Bildaufnahmeeinrichtung, welche dazu ausgebildet ist, fortlaufend Bilddaten, welche eine Umgebung des Fahrzeugs abbilden, aufzunehmen; eine Erfassungseinheit, welche dazu ausgebildet ist, Personen in einem bestimmten Raumwinkel in den aufgenommenen Bilddaten zu erfassen; und eine Auffindungseinrichtung, welche dazu ausgebildet ist, unter den von der Erfassungseinheit erfassten Personen mittels einer Plausibilisierungsoperation die aufzufindende Person aufzufinden.

Bevorzugte Weiterbildungen sind Gegenstand der jeweiligen Unteransprüche.

### Vorteile der Erfindung

Die der vorliegenden Erfindung zugrunde liegende Idee besteht darin, durch das automatisierte Auffinden von aufzufindenden Personen, insbesondere potentiellen bzw. vereinbarten Mitfahrern, längere, von der Verkehrslage unabhängige Verzögerungen zu verringern. Die für das erfindungsgemäße Verfahren bzw. das erfindungsgemäße System notwendigen Bestandteile sind weit verbreitete Geräte und Einrichtungen, sodass das Verfahren verhältnismäßig leicht und ohne große zusätzliche Kosten implementierbar ist.

Bei Verwendung des erfindungsgemäßen Verfahrens kann das "Dynamic Ridesharing" wesentlich effizienter durchgeführt werden. Insbesondere bei Fahrgemeinschaften für Kurz- und/oder Teilstrecken innerhalb einer Stadt kann jede gewonnene Minute für die Attraktivität der Bildung einer Fahrgemeinschaft relevant sein.

Gemäß einer bevorzugten Weiterbildung weist das Verfahren die weiteren Schritte auf: Erzeugen einer Augmented-Reality-Bilddarstellung basierend auf dem Ergebnis des Auffindens und Anzeigen der erzeugten Augmented-Reality-Bilddarstellung mittels einer Anzeigeeinrichtung. Die aufgefundene Person kann dem Fahrzeugführer somit besonders schnell und klar angezeigt werden, und es können Verwechslungen vermieden werden.

Gemäß einer weiteren bevorzugten Weiterbildung weist die erzeugte Augmented-Reality-Bilddarstellung in dem Fall, dass die aufzufindende Person in dem zuletzt bestimmten Raumwinkel aufgefunden wurde, die aufgenommenen Bilddaten in dem zuletzt bestimmten Raumwinkel und eine Markierung der aufgefundenen Person auf. Gemäß einer weiteren bevorzugten Weiterbildung weist die erzeugte Augmented-Reality-Bilddarstellung in dem Fall, dass die aufzufindende Person in dem zuletzt bestimmten Raumwinkel nicht eindeutig aufgefunden wurde, die aufgenommenen Bilddaten und eine Markierung des bestimmten Raumwinkels und/oder eine Markierung aller erfassten Personen auf. Somit ist der Fahrzeugführer über den aktuellen Status des Verfahrens informiert und kann gegebenenfalls alternative Maßnahmen ergreifen.

Gemäß einer weiteren bevorzugten Weiterbildung umfasst das Verfahren ein Erstellen und Anzeigen von Navigationsdaten basierend auf den zuletzt bestimmten Positionen der aufzufindenden Person und der aktuellen Position des Fahrzeugs, welche den Führer des Fahrzeugs anweisen, das Fahrzeug in die zuletzt festgelegte Nahzone, vorzugsweise direkt zu der zuletzt bestimmten Position der aufzufindenden Person, zu fahren. Dies kann beispielsweise über eine im Fahrzeug vorhandene Navigationseinrichtung erfolgen. Der Fahrzeugführer kann somit darin unterstützt werden, auf die schnellste und effizienteste Weise einen Ort anzusteuern, an dem das Treffen mit der aufzufindenden Person, bzw. dem Mitfahrer, vereinbart wurde.

Gemäß einer weiteren bevorzugten Weiterbildung wird das Bestimmen der Position der aufzufindenden Person und das Festlegen der Nahzone um die Position der aufzufindenden Person und/oder, während des Aufenthalts des Fahrzeugs innerhalb der Nahzone, das Bestimmen des Raumwinkels jeweils kontinuierlich oder in regelmäßigen Abständen und/oder auf Wunsch eines Benutzers durchgeführt. Dadurch können die entsprechenden Aktionen so häufig wie nötig erfolgen, um eine effiziente Routenführung und ein besonders schnelles Auffinden der aufzufindenden Person zu ermöglichen.

Gemäß einer weiteren bevorzugten Weiterbildung umfasst die Plausibilisierungsoperation beim Auffinden der aufzufindenden Person ein Vergleichen eines jeweils gemessenen Abstands zwischen jeweils jeder der erfassten Personen und dem Fahrzeug mit einem berechneten Abstand zwischen der zuletzt bestimmten Position der aufzufindenden Person und der aktuellen Position des Fahrzeugs, wobei diejenige Person durch die Plausibilisierungsoperation aufgefunden wird, deren gemessener Abstand zum Fahrzeug mit dem berechneten Abstand innerhalb einer vorbestimmten Toleranz übereinstimmt. Bei dem Aufenthalt mehrerer Personen im bestimmten Raumwinkel kann so die aufzufindende Person genauer bestimmt werden. Auch wenn nur eine einzelne Person im bestimmten Raumwinkel erfasst wurde, kann die Plausibilisierungsoperation zur Plausibilisierung dienen. Unterscheiden sich in einem solchen Fall der gemessene und der berechnete Abstand mehr als um einen vorbestimmten Wert, kann ein Fehlschlag des Auffindens angezeigt werden.

Gemäß einer weiteren bevorzugten Weiterbildung wird die Nahzone weiterhin unter Verwendung von bereitstellbarem Kartenmaterial derart eingeschränkt, dass sie nur solche Orte umfasst, von welchen aus freie Sicht auf die zuletzt bestimmte Position der aufzufindenden Person besteht. Dadurch kann die Genauigkeit des Auffindens weiter verbessert werden.

Gemäß einer weiteren bevorzugten Weiterbildung erfolgt die Definition der Nahzone nach Maßgabe von zusätzlichen bereitstellbaren Parametern, welche auf Wunsch eines Benutzers und/oder aufgrund von Messungen mittels lokaler Fahrzeugsensoren und/oder aufgrund von fahrzeugexternen Informationen bestimmt und/oder angepasst werden. Die Genauigkeit des Auffindens kann so durch Anpassung an lokale Gegebenheiten noch weiter verbessert werden.

Gemäß einer bevorzugten Weiterbildung des erfindungsgemäßen System weist das System weiterhin eine Augmented-Reality-Erzeugungseinrichtung, welche dazu ausgebildet ist, Augmented-Reality-Bilddarstellungen zu erzeugen, und eine Anzeigeeinrichtung, welche dazu ausgebildet ist, die erzeugten Augmented-Reality-Bilddarstellungen anzuzeigen, auf. Gemäß einer weiteren bevorzugten Weiterbildung des erfindungsgemäßen System weist das System weiterhin eine Abstands-Messeinrichtung auf, welche dazu ausgebildet ist, mindestens einen Abstand zwischen dem Fahrzeug und mindestens einer Person zu messen. Die Recheneinrichtung ist bei dieser Weiterbildung weiterhin dazu ausgebildet, einen Abstand zwischen zwei Positionen, insbesondere den Abstand zwischen der Position der aufzufindenden Person und der aktuellen Position des Fahrzeugs, zu berechnen und den berechneten Abstand mit dem mindestens einen gemessenen Abstand zu vergleichen. Mit Hilfe dieser Weiterbildungen können oben beschriebene, vorteilhafte Verfahrensschritte des erfindungsgemäßen Verfahrens durchgeführt werden.

### Kurzbeschreibung der Zeichnungen

Ausführungsbeispiele der Erfindung sind in den Figuren der Zeichnung dargestellt und in der nachfolgenden Beschreibung näher erläutert. Dabei zeigt:
- Figur 1: ein Flussdiagramm zum Erläutern einer bevorzugten Ausführungsform des erfindungsgemäßen Verfahrens zum Auffinden von einer oder mehreren Personen 12 durch ein Fahrzeug 10;
- Figur 2: eine schematische, nicht maßstabsgetreue Draufsicht auf ein Fahrzeug 10 beim erfindungsgemäßen Auffinden einer aufzufindenden Person 12;
- Figur 3: eine schematische Ansicht einer Anzeigeeinrichtung 40, welche eine Augmented-Reality-Bilddarstellung 41 anzeigt;
- Figur 4: eine schematische Ansicht einer Anzeigeeinrichtung 40, welche eine Augmented-Reality-Bilddarstellung 41' anzeigt;
- Figur 5: ein schematisches Blockdiagramm einer ersten Ausführungsform eines erfindungsgemäßen Systems zum Auffinden einer oder mehrerer Personen 12 durch ein Fahrzeug 10; und
- Figur 6: ein schematisches Blockdiagramm einer zweiten Ausführungsform eines erfindungsgemäßen Systems zum Auffinden einer oder mehrerer Personen 12 durch ein Fahrzeug 10.

In den Figuren bezeichnen gleiche Bezugszeichen gleiche oder funktionsgleiche Elemente, soweit nichts Gegenteiliges angegeben ist.

### Detaillierte Beschreibung der Zeichnungen

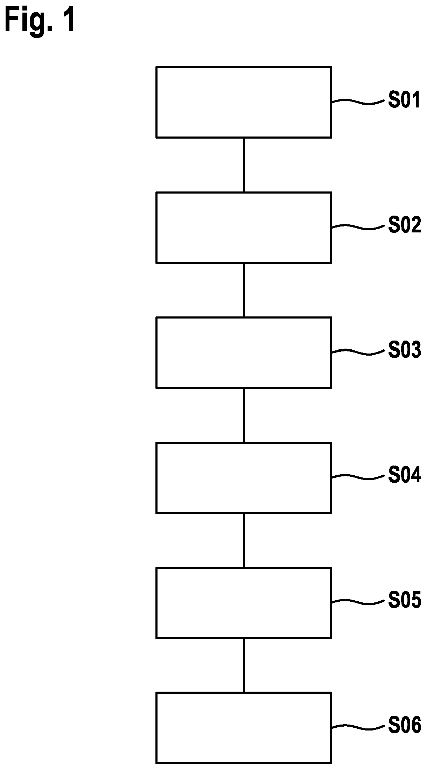

Figur 1 zeigt ein Flussdiagramm zum Erläutern einer bevorzugten Ausführungsform des erfindungsgemäßen Verfahrens zum Auffinden von einer oder mehreren Personen 12 durch ein Fahrzeug 10.

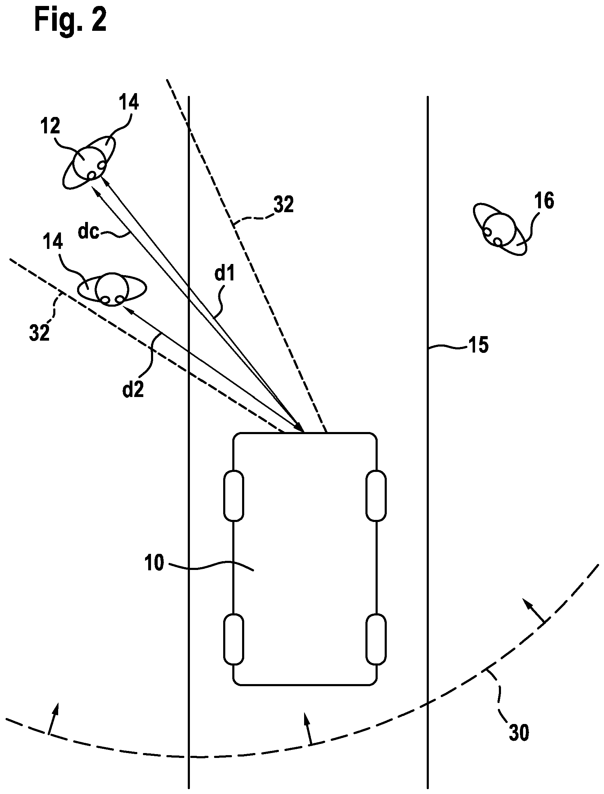

Das in Figur 1 veranschaulichte Verfahren gemäß der ersten Ausführungsform der vorliegenden Erfindung wird im Folgenden auch unter Bezug auf Bezugszeichen in den Figuren 2 bis 4 beschrieben. Das Verfahren wird zumeist für eine aufzufindende Person 12 beschrieben, es kann aber auch ohne Weiteres bei mehreren aufzufindenden Personen angewandt werden.

In einem ersten Verfahrensschritt S01 wird eine Position einer aufzufindenden Person 12 bestimmt. Die aufzufindende Person 12 kann beispielsweise über ein Mobiltelefon mittelbar oder unmittelbar einem oder mehreren Fahrzeugführern bekannt gemacht haben, dass sie wünscht, von einem bestimmten oder einem beliebigen der benachrichtigten Fahrzeugführer aufgefunden zu werden. Dies kann über eine Zentrale erfolgen, welche beispielsweise Mitfahrgelegenheiten vermittelt, etwa unter Zuhilfenahme einer Website. Der eine oder mehrere Fahrzeugführer können und die aufzufindende Person 12 können bei der Zentrale registriert sein und vereinbart haben, dass die entsprechende Person aufzufinden ist, beispielsweise um der aufzufindenden Person 12 in dem Fahrzeug 10 eines der Fahrzeugführer eine Mitfahrgelegenheit zu ermöglichen.

Das Bestimmen S01 der Position der aufzufindenden Personen kann beispielsweise dadurch erfolgen, dass eine aktuelle Position eines dafür bei der Zentrale registrierten Mobiltelefons oder eines anderen tragbaren Geräts der aufzufindenden Person 12 bestimmt wird. Dies kann beispielsweise durch satellitengestützte Systeme wie GPS oder Galileo erfolgen. Möglich ist aber beispielsweise auch eine Triangulation über Mobilfunksendestationen oder bekannte WLAN-Quellen.

Gemäß einer bevorzugten Ausführungsform wird die Position der aufzufindenden Person 12 mittels eines Mobiltelefons durch GPS, unterstützt durch lokale Bewegungssensorik und Kartendaten, fortlaufend bestimmt und fortlaufend über eine Internetverbindung an die Zentrale übertragen. Die Zentrale stellt diese Informationen fortlaufend dem Fahrzeug 10 bereit, welches diese über eine Kommunikationseinrichtung empfängt.

Nach dem Bestimmen S01 der Position der aufzufindenden Personen 12 wird eine Nahzone 30 um die Position der aufzufindenden Personen 12 festgelegt. Die Nahzone 30 ist zumindest durch einen vorbestimmten Maximalabstand von der Position der aufzufindenden Person 12 definiert. Die Nahzone 30 kann beispielsweise eine Kugel oder einen Kugelschnitt mit einem Radius in einem Bereich von 5 bis 20 km um die Position der aufzufindenden Personen 12 aufweisen. Gemäß einer Ausführungsform kann die Nahzone 30 weiterhin unter Verwendung von bereitstellbaren Kartenmaterial derart eingeschränkt sein, dass sie nur solche Orte umfasst, in welchen aus freier Sicht auf die zuletzt bestimmte Position der aufzufindenden Personen 12 besteht. Es können also beispielsweise Orte aus der Nahzone 30 ausgeschlossen werden, welche zwar innerhalb des vorbestimmten Maximalabstands von der Position der aufzufindenden Person 12 liegen, zwischen denen und der Position der aufzufindenden Person 12 jedoch laut dem Kartenmaterial beispielsweise ein Häuserblock liegt. Die Definition der Nahzone 30 kann auch im Zuge des Verfahrens angepasst werden. Bei besonders schlechter Sicht, etwa aufgrund von Regen oder Nebel, was durch lokale Fahrzeugsensoren festgestellt werden kann, kann der Radius der Nahzone 30 beispielsweise verringert werden.

Das Bestimmen S01 der Position der aufzufindenden Person 12 und das Festlegen der Nahzone um diese Position können jeweils kontinuierlich oder in regelmäßigen Abständen und/oder auf Wunsch eines Benutzers durchgeführt werden. Es kann zwischen dem Fahrzeug 10 bzw. dem Führer des Fahrzeugs 10 und einem tragbaren Gerät, beispielsweise einem Mobiltelefon, der aufzufindenden Person 12 eine Datenverbindung, über eine Übermittlungseinrichtung wie etwa das Internet und/oder eine Zentrale und die jeweils nötigen Empfangs- und Sendeeinheiten, aber auch direkt, hergestellt werden. In diesem Fall kann bei kontinuierlicher und/oder regelmäßiger Bestimmung der Position der aufzufindenden Person 12 und entsprechendem Festlegen einer Nahzone 30 eine entsprechende Information über die Position und die Nahzone 30 ebenso kontinuierlich und/oder regelmäßig an das Fahrzeug 10 übermittelt werden.

Gemäß einer weiteren Ausführungsform können, beispielsweise durch eine Navigationseinrichtung des Fahrzeugs 10, basierend auf der zuletzt bestimmten Position der aufzufindenden Person 12 und der aktuellen Position des Fahrzeugs 10 Navigationsdaten erstellt und angezeigt werden. Die Navigationsdaten können den Führer des Fahrzeugs 10 anweisen, das Fahrzeug 10 in die zuletzt festgelegte Nahzone 30, vorzugsweise direkt zu der zuletzt bestimmten Positionen der aufzufindenden Person 12, zu fahren. Bei dieser Ausführungsform des erfindungsgemäßen Verfahrens ist das kontinuierliche Bestimmen der Position der aufzufindenden Person 12 und das Festlegen der Nahzone 30 vorteilhaft.

Gemäß einem Verfahrensschritt S02 wird eine aktuelle Position des Fahrzeugs 10 fortlaufend bestimmt. Das Bestimmen kann dabei ebenfalls beispielsweise durch satellitengestützte Verfahren wie GPS oder Galileo erfolgen. Auch lokale Fahrzeugsensorik, Karteninformationen, Kompassdaten und/oder Videosignale können zum Bestimmen der aktuellen Position des Fahrzeugs 10 verwendet werden.

Gemäß einem weiteren Verfahrensschritt werden, während die aktuelle Position des Fahrzeugs 10 im Verfahrensschritt S02 als innerhalb derjenigen Nahzone 30, welche im Verfahrensschritt S01 zuletzt festgelegt wurde, bestimmt wird, automatisch fortlaufend Bilddaten aufgenommen, welche eine Umgebung des Fahrzeugs 10 abbilden. Die Bilddaten werden von einer Bildaufnahmeeinrichtung, insbesondere von am Fahrzeug 10 angebrachten Videokameras aufgenommen. Vorteilhafterweise wird die aktuelle Position des Fahrzeugs 10 stets auf die Position einer Videokamera bezogen, insbesondere auf die Position einer in Fahrzeugvorwärtsrichtung ausgerichteten Videokamera. Aus der am Fahrzeug fixen Anordnung der Videokameras kann aus der Position und Ausrichtung des Fahrzeugs 10 auch die Position und Ausrichtung aller Videokameras bestimmt werden.

Dadurch, dass das Aufnehmen S03 von Bilddaten lediglich dann stattfindet, während sich das Fahrzeug 10 innerhalb der Nahzone 30 um die zuletzt bekannte bzw. bestimmte Position der aufzufindenden Person 12 befindet, erfordert das erfindungsgemäße Verfahren verhältnismäßig geringe Rechen- und Speicherkapazitäten. Durch genaueres Definieren bzw. Einschränken der Nahzone 30 kann das unnötige Aufnehmen von Bilddaten weiter verringert werden. Unnötig kann das Aufnehmen von Bilddaten dann sein, wenn aus verschiedenen Gründen, beispielsweise einer blockierten Sicht aufgrund von im Weg liegenden Objekten oder schlechten Witterungsbedingungen, es unmöglich oder sehr unwahrscheinlich ist, dass auf den aufgenommenen Bilddaten die aufzufindende Person 12 zu sehen oder identifizierbar ist. Entsprechende Parameter für die Definition der Nahzone 30 können vorbestimmt und/oder auf Wunsch eines Benutzers und/oder aufgrund von Messungen von lokalen Fahrzeugsensoren und/oder aufgrund von fahrzeugexternen Informationen bestimmt und/oder angepasst werden.

Gemäß einem weiteren Verfahrensschritt S04 wird mindestens einmal ein Raumwinkel 32 bestimmt, welcher von der aktuellen Position des Fahrzeugs 10 ausgehend diejenige Position der aufzufindenden Person 12 umfasst, welche zuletzt im Verfahrensschritt S01 bestimmt wurde. Vorteilhafter Weise wird mit jedem erneuten Bestimmen S01 der Position einer aufzufindenden Person 12 und dem damit einhergehenden Festlegen der Nahzone 30 auch der Raumwinkel 32 erneut bestimmt.

Es kann vorgesehen sein, dass das Bestimmen des Raumwinkels 32 nur erfolgt, während die aktuelle Position des Fahrzeugs 10 innerhalb der zuletzt festgelegten Nahzone 30 bestimmt wird. Verfügt das Fahrzeug 10 beispielsweise über keine Navigationseinrichtung, kann der Raumwinkel 32 aber auch bei einer aktuellen Position des Fahrzeugs 10 außerhalb der Nahzone 30 kontinuierlich oder regelmäßig bestimmt und dem Führer des Fahrzeugs 10 mittels einer Anzeigeeinrichtung angezeigt werden. So kann der Führer des Fahrzeugs 10 Informationen über eine Richtung erhalten, in welcher sich die aufzufindende Person 12 von dem Fahrzeug 10 aus gesehen derzeit befindet.

Gemäß einem weiteren Verfahrensschritt S05 werden in dem Raumwinkel 32, welcher zuletzt bestimmt wurde, in den aufgenommenen Bilddaten Personen 12, 14 erfasst. Dies kann beispielsweise durch gängige Verfahren erfolgen, welche dazu geeignet sind, menschliche Gesichter in Bilddaten zu isolieren und/oder zu identifizieren. Personen 16, welche in den aufgenommene Bilddaten, aber nicht innerhalb des Raumwinkels 32 zu sehen sind, werden dabei vorteilhafterweise nicht erfasst.

Aufgrund der bekannten Position und Ausrichtung der Videokameras des Fahrzeugs 10 kann bestimmt werden, dass zu jedem Zeitpunkt nur solche Bilddaten aufgenommen werden, welche den Raumwinkel 32, welcher zuletzt bestimmt wurde, zu diesem Zeitpunkt umfassen.

Gemäß einem weiteren Verfahrensschritt S06 wird die aufzufindende Person 12 unter den in dem Raumwinkel 32 erfassten Personen 12, 14 mittels einer Plausibilisierungsoperation aufgefunden. Die Plausibilisierungsoperation gemäß der bevorzugten Ausführungsform umfasst ein Messen von Abständen d1, d2 zwischen jeweils jeder der erfassten Personen 12, 14 und dem Fahrzeug 10. Zusätzlich wird ein Abstand dc zwischen der zuletzt bestimmten Position der aufzufindenden Person 12 und der aktuellen Position des Fahrzeugs 10 berechnet werden.

Bei der Plausibilisierungsoperation wird der berechnete Abstand dc mit den gemessenen Abständen d1, d2 verglichen, wobei bei Übereinstimmung eines gemessenen Abstands d1 zwischen dem Fahrzeug 10 und einer erfassten Person 12 innerhalb einer vorbestimmten Toleranz die Person 12 als die aufzufindende Person 12 identifiziert bzw. aufgefunden wird. Die Toleranz hängt von dem jeweils verwendeten Verfahren zur Abstandsmessung, Abstandsberechnung und Positionsbestimmung ab, insbesondere von deren jeweiliger Genauigkeit.

Die Plausibilisierungsoperation kann auch einen Höhenvergleich umfassen. Dabei kann ein Vergleich einer Höhe über NN der aufzufindenden Person 12, welche aus ihrer Position bekannt ist, mit einer empirisch bestimmten Höhe über NN der erfassten Personen 12, 14, beispielsweise durch Messen der Höhe über NN des Fahrzeugs 10 und Berücksichtigen der jeweiligen Abstände d1, d2, umfassen.

In einem weiteren Verfahrensschritt kann basierend auf dem Ergebnis des Auffindens S06 der aufzufindenden Person 12 eine Augmented-Reality-Bilddarstellung (41, 41') erzeugt und mittels einer Anzeigeeinrichtung 40 des Fahrzeugs 10 angezeigt werden. Die Anzeigeeinrichtung 40 kann beispielsweise ein Head-up-Display, ein Bildschirm einer Navigationseinrichtung oder ein anderer, im Fahrzeug 10 dauerhaft oder temporär angeordneter, Bildschirm sein.

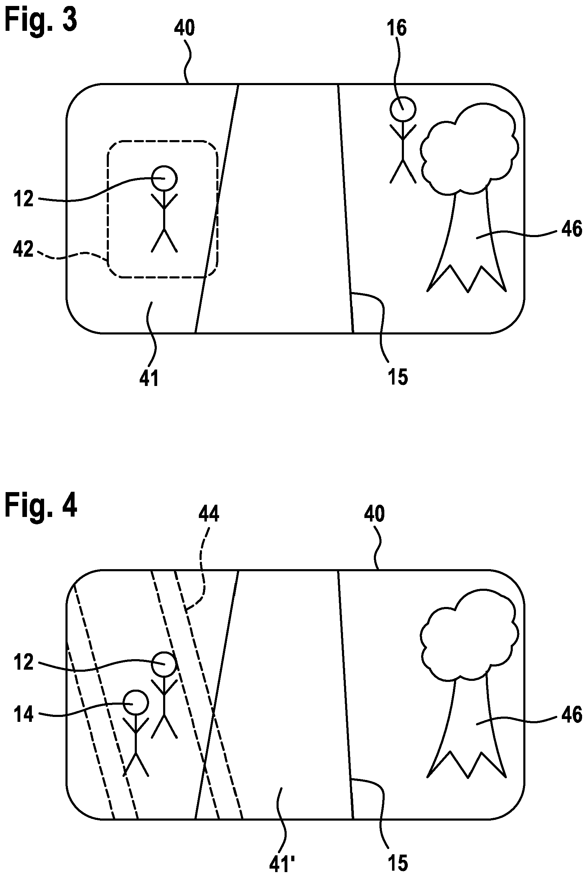

Wurde die aufzufindende Person 12 in einem Raumwinkel 32 aufgefunden, kann die Augmented-Reality-Bilddarstellung (41) aufgenommene Bilddaten, welche den entsprechenden Raumwinkel 32 umfassen, sowie eine Markierung 42 der aufgefundenen Person 12 aufweisen, wie in Figur 3 schematisch dargestellt.

In dem Fall, dass die aufzufindende Person 12 in dem Raumwinkel 32 nicht aufgefunden wurde, kann die Augmented-Reality-Bilddarstellung (41') zumindest einen Teil der aufgenommenen Bilddaten, welcher den Raumwinkel 32 umfasst, und eine Markierung 44 des Raumwinkels 32 aufweisen, wie in Figur 4 schematisch dargestellt. Falls in dem Raumwinkel 32 keine Person 12, 14 erfasst wurde, kann für den Führer des Fahrzeugs 10 der Raumwinkel 32 markiert werden, so dass er einen Anhaltspunkt für eine eigene Suche erhält. Wird eine Mehrzahl von Personen 14 in dem Raumwinkel 32 erfasst, können die erfassten Personen 14 und/oder deren Gesichter markiert werden. Das Markieren der Gesichter der erfassten Personen 12, 14 kann zusätzlich oder anstelle der Markierung 44 des Raumwinkels 32 erfolgen.

Gemäß einer Ausführungsform des erfindungsgemäßen Verfahrens ist es möglich, mehrere Personen aufzufinden. Reisen beispielsweise zwei (oder mehr) Personen gemeinsam, kann eine der beiden (oder mehreren) Personen als aufzufindende Person 12 festgesetzt und ihre Position im Folgenden für das oben beschriebene Verfahren verwendet werden. An das Fahrzeug 10, beispielsweise über eine Zentralstelle, mit welcher sowohl die aufzufindenden Person 12 als auch ein Führer des Fahrzeugs 10 in Verbindung stehen, kann eine Anzahl der gemeinsam mit der aufzufindenden Person 12 reisenden Personen, die aufzufindende Person eingeschlossen, übermittelt werden.

Werden im Verfahrensschritt S05 im späteren Verlauf beispielsweise zwei (oder mehr) Personen 12, 14 in dem Raumwinkel 32 erfasst, welche innerhalb der Fehlertoleranz mittels der Plausibilisierungsoperation beim Auffinden S06 der aufzufindenden Person 12 nicht unterschieden werden können, kann in diesem Fall dennoch ein erfolgreiches Auffinden stattgefunden haben. Dies kann dann der Fall sein, wenn die Anzahl der erfassten Personen 12, 14 der übermittelten Anzahl der gemeinsam reisenden Personen entspricht. Eine entsprechende Markierung, beispielsweise in einer ersten Farbe, kann den Führer des Fahrzeugs 10 informieren, dass die erfassten Personen 14 die mit der aufzufindenden Person 12 reisenden Personen sind.

Im Unterschied dazu kann bei einem Erfassen S05 von Personen 14 in einer Zahl, welche die übermittelten Anzahl der mit der aufzufindenden Person 12 gemeinsam reisenden Personen über- oder unterschreitet, ein Markieren aller erfassten Personen 14 mit einem Rahmen erfolgen, welcher sich vom Rahmen im Fall des erfolgreichen Auffindens S06 der aufzufindenden Personen 12 unterschiedet. Reist beispielsweise eine weitere Person mit der aufzufindenden Person 12, werden aber drei Personen 14 im Raumwinkel 32 erfasst, können die erfassten Personen 14 mit einem Rahmen, beispielsweise in einer zweiten Farbe, markiert werden.

Gibt es mehrere aufzufindende Personen 12, welche nicht gemeinsam reisen, kann das erfindungsgemäße Verfahren für jede aufzufindende Person 12 nacheinander durchgeführt werden. Es kann aber auch überprüft werden, ob sich die Nahzonen 30 von zwei oder mehr der aufzufindenden Personen 12 überschneiden. In diesem Fall kann als neue Nahzone 30 der Überschneidungsbereich der einzelnen Nahzonen 30 der zwei oder mehr aufzufindenden Personen 12 definiert werden. Beim Erreichen der neuen Nahzone 30 kann für jede der aufzufindenden Personen 12 ein Raumwinkel 32 fortlaufend bestimmt werden, wobei für jeden bestimmten Raumwinkel 32 das erfindungsgemäße Verfahren dann separat weiter durchgeführt wird. Mittels der Anzeigeeinrichtung 40 können alle bestimmten Raumwinkel 32 gleichzeitig oder nacheinander angezeigt werden.

Figur 2 zeigt eine schematische, nicht maßstabsgetreue Draufsicht auf ein Fahrzeug 10 beim erfindungsgemäßen Auffinden einer aufzufindenden Person 12.

Das Fahrzeug 10 befindet sich innerhalb der um die aufzufindende Person 12, bzw. um die zuletzt bestimmte Position der aufzufindenden Person 12, festgelegte Nahzone 30. Die Innenseite der Nahzone 30 ist dabei durch die nach innen gerichteten Pfeile symbolisiert. Der gestrichelte Rand der Nahzone 30 entspricht dem vorbestimmten Maximalabstand von der Position der aufzufindenden Person 12. Das Fahrzeug 10 befindet sich auf einer Fahrbahn 15. In der näheren Umgebung des Fahrzeugs 10 befinden sich mehrere Personen 12, 14, 16. Gemäß dem Verfahrensschritt S04 ist ein Raumwinkel 32 bestimmt, welcher von der aktuellen Position des Fahrzeugs 10 ausgehend diejenige Position der aufzufindenden Person 12 umfasst, welche zuletzt bestimmt wurde. Im in Figur 2 gezeigten Beispiel befinden sich zwei Personen 12, 14 in dem bestimmten Raumwinkel 32. Der verhältnismäßig große Raumwinkel 32 kann beispielsweise deswegen so groß sein, weil die fehlerbehafteten Positionsbestimmungen keinen kleineren Raumwinkel 32 ermöglichen.

In Figur 2 sind Abstände d1, d2 zwischen dem Fahrzeug 10 und den Personen 14 im Raumwinkel 32 eingezeichnet. Die beispielsweise mittels einer am Fahrzeug 10 ausgebildeten Radarvorrichtung gemessenen Abstände d1, d2 können, wie oben beschrieben, in der Plausibilisierungsoperation im Verfahrensschritt S06 Verwendung finden. Dabei können sie mit einem berechneten Abstand dc verglichen werden, welcher aus Basis der aktuellen Position des Fahrzeugs 10 und der zuletzt bestimmten Position der aufzufindenden Person 12 berechnet werden kann. Gemäß einer bevorzugten Ausführungsform kann aufgrund der innerhalb der vorbestimmten Toleranz übereinstimmenden Abstände dc und d1 die aufzufindende Person 12 als solche aufgefunden bzw. identifiziert werden. Dabei wird die erfasste Person 14 als aufzufindende Person 12 verworfen, weil der gemessene Abstand d2 der erfassten Person 14 von dem Fahrzeug 10 weniger genau mit dem berechneten Abstand dc übereinstimmt als der gemessene Abstand d1 der aufzufindenden Person 12 mit dem berechneten Abstand dc, und/oder weil der gemessene Abstand d2 nicht innerhalb der vorbestimmten Toleranz mit dem berechneten Abstand dc übereinstimmt.

Figur 3 zeigt eine schematische Ansicht einer Anzeigeeinrichtung 40, welche eine Augmented-Reality-Bilddarstellung 41 anzeigt.

Die in Figur 3 gezeigte Augmented-Reality-Bilddarstellung 41 umfasst einen Teil der aufgenommenen Bilddaten, welcher den zuletzt bestimmten Raumwinkel 32 umfasst, sowie eine hinzugefügte virtuelle Markierung 42 und unbeteiligte Objekte 46. Mit der Markierung 42 ist die in Verfahrensschritt S06 aufgefundene aufzufindende Person 12 markiert. Eine Person 16, welche sich nicht innerhalb des zuletzt bestimmten Raumwinkel 32 (nicht eingezeichnet) befindet, ist nicht markiert.

Figur 4 zeigt eine schematische Ansicht einer Anzeigeeinrichtung 40, welche eine Augmented-Reality-Bilddarstellung 41' anzeigt. Die in Figur 4 gezeigte Augmented-Reality-Bilddarstellung 41' umfasst einen Teil der aufgenommenen Bilddaten, welcher den zuletzt bestimmten Raumwinkel 32 umfasst, sowie eine hinzugefügte virtuelle Markierung 44 und unbeteiligte Objekte 46. Mit der Markierung 44 ist der zuletzt bestimmte Raumwinkel 32 markiert, in welchem sich mehrere erfasste Personen 12, 14 befinden.

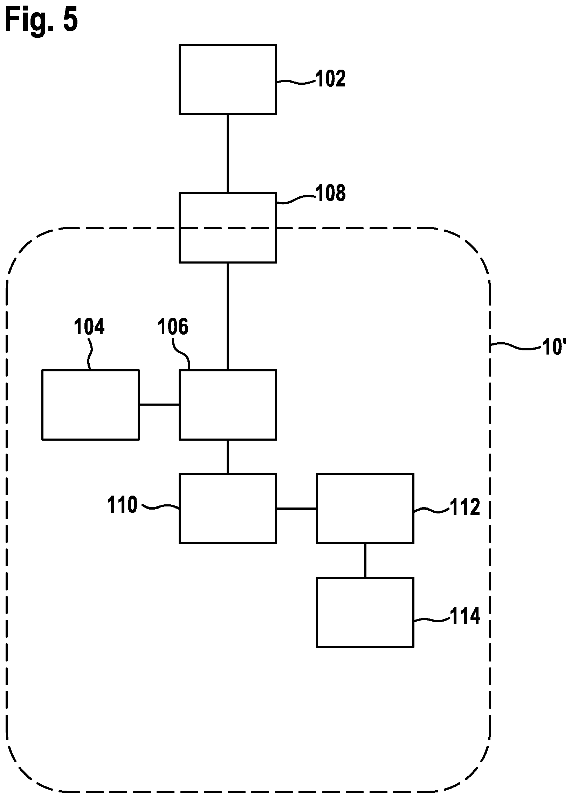

Figur 5 zeigt ein schematisches Blockdiagramm einer ersten Ausführungsform eines erfindungsgemäßen Systems zum Auffinden einer oder mehrerer Personen 12 durch ein Fahrzeug 10.

Gemäß Figur 5 weist das System eine erste Positionsbestimmungseinrichtung 102 auf welche dazu ausgebildet ist, die Position der aufzufindenden Person 12 zu bestimmen.

Die erste Positionsbestimmungseinrichtung 102 kann beispielsweise in einem Mobiltelefon ausgebildet sein, welches die aufzufindende Person 12 mit sich führt. Eine zweite Positionsbestimmungseinrichtung 104 ist dazu ausgebildet, fortlaufend eine aktuelle Position des Fahrzeugs 10 zu bestimmen. Diese ist vorteilhafterweise am Fahrzeug 10 angeordnet, wie in Figur 5 durch eine Strichlinie angedeutet.

Eine Recheneinrichtung 106 ist dazu ausgebildet, die Nahzone 30 um die Position der aufzufindenden Person 12 festzulegen, beispielsweise wie in Bezug auf die Figuren 1 und 2 oben beschrieben. Eine Übermittlungseinrichtung 108 ist dazu ausgebildet, die bestimmte Position der aufzufindenden Person 12 an die Recheneinrichtung 106 zu übermitteln. Die Übermittlungseinrichtung 108 kann beispielsweise als Internetportal und eine oder mehrere Sende- und Empfangseinheiten für den Zugang zum Internet, jeweils am Fahrzeug 10 und/oder bei der aufzufindenden Person 12 angeordnet, ausgebildet sein.

Eine Bildaufnahmeeinrichtung 110, beispielsweise als eine oder mehrere Videokameras ausgebildet, ist dazu ausgebildet, fortlaufend Bilddaten, welche eine Umgebung des Fahrzeugs 10 abbilden, aufzunehmen. Eine Erfassungseinheit 112 ist dazu ausgebildet, Personen 12, 14, 16 in einem bestimmten Raumwinkel 32 in den aufgenommenen Bilddaten zu erfassen.

Eine Auffindungseinrichtung 114 ist dazu ausgebildet, unter den von der Erfassungseinheit erfassten Personen 12, 14 mittels einer Plausibilisierungsoperation die aufzufindende Person 12 aufzufinden.

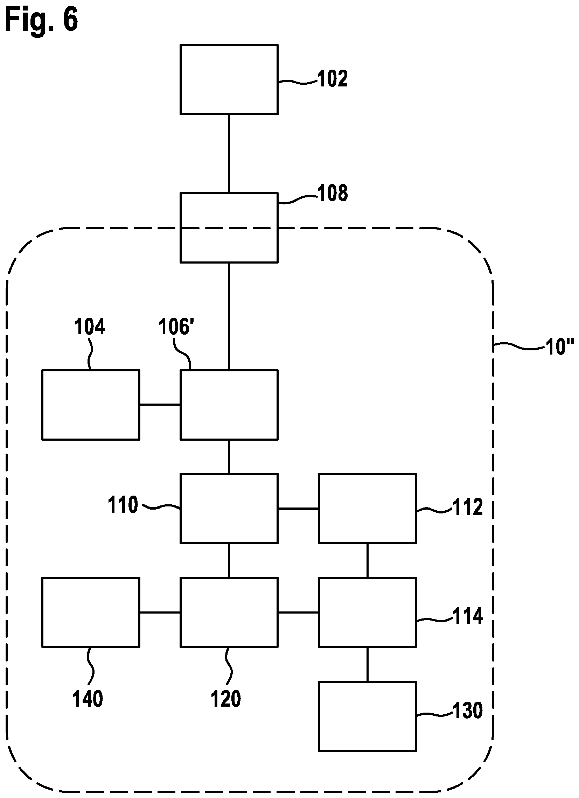

Figur 6 zeigt ein schematisches Blockdiagramm einer zweiten Ausführungsform eines erfindungsgemäßen Systems zum Auffinden einer oder mehrerer Personen 12 durch ein Fahrzeug 10.

Die zweite Ausführungsform des erfindungsgemäßen Systems weist dieselben Merkmale wie die erste Ausführungsform gemäß Figur 5 auf. Darüber hinaus ist eine Augmented-Reality-Erzeugungseinrichtung 120 vorgesehen, welche dazu ausgebildet ist, Augmented-Reality-Bilddarstellungen 41, 41' zu erzeugen, sowie eine Anzeigeeinrichtung 140, welche dazu ausgebildet ist, die erzeugten Augmented-Reality-Bilddarstellungen 41, 41' anzuzeigen.

Weiterhin ist eine Abstands-Messeinrichtung 130 vorgesehen, welche dazu ausgebildet ist, mindestens einen Abstand d1, d2 zwischen dem Fahrzeug 10 und mindestens einer Person 12, 14 zu messen. Gemäß der zweiten Ausführungsform ist die Recheneinrichtung 106' weiterhin dazu ausgebildet, einen Abstand zwischen zwei Positionen, insbesondere den Abstand dc zwischen der Position der aufzufindenden Person 12 und der aktuellen Position des Fahrzeugs 10, zu berechnen und den berechneten Abstand dc mit dem mindestens einen gemessenen Abstand d1, d2 zu vergleichen.

Obwohl die Erfindung vorliegend anhand bevorzugter Ausführungsbeispiele beschrieben wurde, ist sie darauf keineswegs beschränkt, sondern auf vielfältige Weise modifizierbar.

Das Bestimmen S01 der Position kann gemäß einer weiteren Ausführungsform etwa dadurch erfolgen, dass ein Benutzer, beispielsweise die aufzufindende Person 12 oder ein Fahrzeugführer, Ortskoordinaten festlegt. Dies kann vorteilhaft sein, wenn der Fahrzeugführer die aufzufindende Person 12 an einem Ort auffinden soll, welcher nicht der gegenwärtige Aufenthaltsort der aufzufindenden Person 12 ist.

Weiterhin sind die in Figur 3 und Figur 4 gezeigten Augmented-Reality-Bilddarstellungen 41, 41' um die Vorwärtsrichtung des Fahrzeugs 10 zentriert. Möglich ist aber auch eine anpassbare Zentrierung etwa auf den jeweiligen zuletzt bestimmten Raumwinkel 32 oder auf die aufgefundene aufzufindende Person 12.

Es kann, anstelle der beschriebenen visuellen Darstellung mittels der Anzeigeeinrichtung 40, oder auch ergänzend zu dieser, eine akustische Informationsausgabe erfolgen, indem etwa eine computergenerierte Stimme die Position der aufgefundenen aufzufindenden Person 12 in Worten beschreibt.

Anstelle eines Mitfahrers kann das Verfahren auch zum Auffinden einer flüchtigen aufzufindenden Person 12 verwendet werden, deren Position beispielsweise kontinuierlich durch einen Sender oder ein Mobiltelefon bestimmt werden kann.

## Patentansprüche

1. Verfahren zum Auffinden einer oder mehrerer Personen durch ein Fahrzeug (10) mit den Verfahrensschritten:
• Mindestens einmaliges Bestimmen (S01) einer Position einer aufzufindenden Person (12) und Festlegen einer Nahzone (30) um diese Position, wobei die Nahzone (30) zumindest durch einen vorbestimmten Maximalabstand von dieser Position definiert wird;
• Fortlaufendes Bestimmen (S02) einer aktuellen Position des Fahrzeugs (10);
• Automatisches fortlaufendes Aufnehmen (S03) von Bilddaten, welche eine Umgebung des Fahrzeugs (10) abbilden, während die aktuelle Position des Fahrzeugs (10) innerhalb derjenigen Nahzone (30), welche zuletzt festgelegt (S01) wurde, bestimmt (S02) wird;
• Mindestens einmaliges Bestimmen (S04) eines Raumwinkels (32), welcher von der aktuellen Position des Fahrzeugs (10) ausgehend diejenige Position der aufzufindenden Person (12) umfasst, welche zuletzt bestimmt (S01) wurde;
• Erfassen (S05) von Personen (12, 14) in dem Raumwinkel (32), welcher zuletzt bestimmt wurde, in den aufgenommenen (S03) Bilddaten;
• Auffinden (S06) der aufzufindenden Person (12) unter den erfassten Personen (12, 14) mittels einer Plausibilisierungsoperation,
- wobei die Plausibilisierungsoperation beim Auffinden (S06) der aufzufindenden Person (12) ein Vergleichen eines jeweils gemessenen Abstands (d1, d2) zwischen jeweils jeder der erfassten Personen (12, 14) und dem Fahrzeug (10) mit einem berechneten Abstand (dc) zwischen der zuletzt bestimmten Position der aufzufindenden Person (12) und der aktuellen Position des Fahrzeugs (10) umfasst;
- wobei diejenige Person (12, 14) durch die Plausibilisierungsoperation aufgefunden wird, deren gemessener Abstand (d1, d2) zum Fahrzeug (10) mit dem berechneten Abstand (dc) innerhalb einer vorbestimmten Toleranz übereinstimmt.

2. Verfahren nach Anspruch 1 mit den Verfahrensschritten:
• Erzeugen einer Augmented-Reality-Bilddarstellung (41, 41') basierend auf dem Ergebnis des Auffindens (S06); und
• Anzeigen der erzeugten Augmented-Reality-Bilddarstellung (41, 41') mittels einer Anzeigeeinrichtung (40; 140).

3. Verfahren nach Anspruch 2, wobei die erzeugte Augmented-Reality-Bilddarstellung (41) in dem Fall, dass die aufzufindende Person (12) in dem zuletzt bestimmten Raumwinkel (32) aufgefunden wurde, die aufgenommenen Bilddaten in dem zuletzt bestimmten Raumwinkel (32) und eine Markierung (42) der aufgefundenen Person (12) aufweist.

4. Verfahren nach einem der Ansprüche 2 oder 3, wobei die erzeugte Augmented-Reality-Bilddarstellung (41') in dem Fall, dass die aufzufindende Person (12) in dem zuletzt bestimmten Raumwinkel (32) nicht eindeutig aufgefunden wurde, die aufgenommenen Bilddaten und eine Markierung (44) des bestimmten Raumwinkels (32) und/oder eine Markierung aller erfassten Personen (12, 14) umfasst.

5. Verfahren nach einem der vorherigen Ansprüche, mit dem Verfahrensschritt:
Erstellen und Anzeigen von Navigationsdaten basierend auf den zuletzt bestimmten Positionen der aufzufindenden Person (12) und der aktuellen Position des Fahrzeugs (10), welche den Führer des Fahrzeugs (10) anweisen, das Fahrzeug (10) in die zuletzt festgelegte Nahzone (30), vorzugsweise direkt zu der zuletzt bestimmten Position der aufzufindenden Person (12), zu fahren.

6. Verfahren nach einem der vorherigen Ansprüche, wobei das Bestimmen (S01) der Position der aufzufindenden Person (12) und das Festlegen der Nahzone (30) um die Position der aufzufindenden Person (12) und/oder, während des Aufenthalts des Fahrzeugs (10) innerhalb der Nahzone (30), das Bestimmen (S04) des Raumwinkels (32) jeweils kontinuierlich oder in regelmäßigen Abständen und/oder auf Wunsch eines Benutzers durchgeführt werden.
wobei diejenige Person (12, 14) durch die Plausibilisierungsoperation aufgefunden wird, deren gemessener Abstand (d1, d2) zum Fahrzeug (10) mit dem berechneten Abstand (dc) innerhalb einer vorbestimmten Toleranz übereinstimmt.

7. Verfahren nach einem der vorherigen Ansprüche, wobei die Nahzone (30) weiterhin unter Verwendung von bereitstellbarem Kartenmaterial derart eingeschränkt wird, dass sie nur solche Orte umfasst, von welchen aus freie Sicht auf die zuletzt bestimmte Position der aufzufindenden Person (12) besteht.

8. Verfahren nach einem der vorherigen Ansprüche, wobei die Definition der Nahzone (30) nach Maßgabe von zusätzlichen bereitstellbaren Parametern erfolgt, welche auf Wunsch eines Benutzers und/oder aufgrund von Messungen mittels lokaler Fahrzeugsensoren und/oder aufgrund von fahrzeugexternen Informationen bestimmt und/oder angepasst werden.

9. System zum Auffinden einer oder mehrerer Personen durch ein Fahrzeug (10), insbesondere zur Durchführung eines Verfahrens gemäß einem der vorherigen Ansprüche 1 bis 8, mit:
einer ersten Positionsbestimmungseinrichtung (102), welche dazu ausgebildet ist, eine Position einer aufzufindenden Person (12) zu bestimmen (S01);
einer zweiten Positionsbestimmungseinrichtung (104), welche dazu ausgebildet ist, fortlaufend eine aktuelle Position des Fahrzeugs (10) zu bestimmen (S03);
einer Recheneinrichtung (106), welche dazu ausgebildet ist, eine Nahzone (30) um die Position der aufzufindenden Person (12) festzulegen, wobei die Nahzone (30) zumindest durch einen vorbestimmten Maximalabstand von der Position der aufzufindenden Person (12) definiert wird; und einen Raumwinkel (32) zu bestimmen, welcher ausgehend von der aktuellen Position des Fahrzeugs (10) die zuletzt bestimmte Position der aufzufindenden Person (12) umfasst;
einer Übermittlungseinrichtung (108), welche dazu ausgebildet ist, die bestimmte Position der aufzufindenden Person (12) an die Recheneinrichtung (106) zu übermitteln;
einer Bildaufnahmeeinrichtung (110), welche dazu ausgebildet ist, fortlaufend Bilddaten, welche eine Umgebung des Fahrzeugs (10) abbilden, aufzunehmen; und
einer Erfassungseinheit (112), welche dazu ausgebildet ist, Personen (12, 14, 16) in einem bestimmten Raumwinkel (32) in den aufgenommenen Bilddaten zu erfassen;
einer Auffindungseinrichtung (114), welche dazu ausgebildet ist, unter den von der Erfassungseinheit erfassten Personen (12, 14) mittels einer Plausibilisierungsoperation die aufzufindende Person (12) aufzufinden
- wobei die Plausibilisierungsoperation beim Auffinden (S06) der aufzufindenden Person (12) ein Vergleichen eines jeweils gemessenen Abstands (d1, d2) zwischen jeweils jeder der erfassten Personen (12, 14) und dem Fahrzeug (10) mit einem berechneten Abstand (dc) zwischen der zuletzt bestimmten Position der aufzufindenden Person (12) und der aktuellen Position des Fahrzeugs (10) umfasst;
- wobei diejenige Person (12, 14) durch die Plausibilisierungsoperation aufgefunden wird, deren gemessener Abstand (d1, d2) zum Fahrzeug (10) mit dem berechneten Abstand (dc) innerhalb einer vorbestimmten Toleranz übereinstimmt.

10. System nach Anspruch 9, insbesondere zur Durchführung eines Verfahrens gemäß Anspruch 2, mit:
einer Augmented-Reality-Erzeugungseinrichtung (120), welche dazu ausgebildet ist, Augmented-Reality-Bilddarstellungen (41, 41') zu erzeugen; und
eine Anzeigeeinrichtung (40; 140), welche dazu ausgebildet ist, die erzeugten Augmented-Reality-Bilddarstellungen (41, 41') anzuzeigen.

13. System nach einem der Ansprüche 9 oder 10, insbesondere zur Durchführung eines Verfahrens gemäß Anspruch 5, mit:
einer Abstands-Messeinrichtung (130), welche dazu ausgebildet ist, mindestens einen Abstand (d1, d2) zwischen dem Fahrzeug (10) und mindestens einer Person (12, 14) zu messen;
wobei die Recheneinrichtung (106) weiterhin dazu ausgebildet ist, einen Abstand zwischen zwei Positionen, insbesondere den Abstand (dc) zwischen der Position der aufzufindenden Person (12) und der aktuellen Position des Fahrzeugs (10), zu berechnen und den berechneten Abstand (dc) mit dem mindestens einen gemessenen Abstand (d1, d2) zu vergleichen.

## Claims

1. Method for locating one or more persons by means of a vehicle (10), having the method steps:
• at least single determination (S01) of a position of a person (12) to be located, and definition of a near zone (30) around this position, wherein the near zone (30) is defined at least by a predetermined maximum distance from this position;
• continuous determination (S02) of a current position of the vehicle (10);
• automatic continuous collection (S03) of image data which represent the surroundings of the vehicle (10), while the current position of the vehicle (10) is determined (S02) within that near zone (30) which was defined last (S01);
• at least single determination (S04) of a solid angle (32) which, starting from the current position of the vehicle (10), comprises that position of the person (12) to be located which was determined last (S01);
• detecting (S05) persons (12, 14) in the solid angle (32) which was determined last in the collected (S03) image data;
• locating (S06) the person (12) to be located among the detected persons (12, 14) by means of a plausibility-checking operation,
- wherein, when the person (12) to be located is located (S06), the plausibility-checking operation comprises comparing a respectively measured distance (d1, d2) between, in each case, each of the sensed persons (12, 14) and the vehicle (10) with the calculated distance (dc) between the position determined last for the person (12) to be located and the current position of the vehicle (10);
- wherein that person (12, 14) whose measured distance (d1, d2) from the vehicle (10) corresponds to the calculated distance (dc) within a predetermined tolerance is located by the plausibility-checking operation.

2. Method according to Claim 1 having the method steps:
• generating an augmented reality image representation (41, 41') on the basis of the result of the locating process (S06); and
• displaying the generated augmented reality image representation (41, 41') by means of a display device (40; 140).

3. Method according to Claim 2 wherein in the event of the person (12) who is to be located having been located in the solid angle (32) determined last, the generated augmented reality image representation (41) has the collected image data in the solid angle (32) determined last and a marking (42) of the person (12) who has been located.

4. Method according to one of Claims 2 and 3, wherein in the event of the person (12) who is to be located not having been clearly located in the solid angle (32) determined at least, the augmented reality image representation (41') comprises the recorded image data and a marking (44) of the determined solid angle (32) and/or marking of all the detected persons (12, 14).

5. Method according to one of the preceding claims, having the method step: producing and displaying navigation data on the basis of the positions determined last for the person (12) who is to be located, and the current position of the vehicle (10), which data instruct the driver of the vehicle (10) to drive the vehicle (10) into the near zone (30) defined last, preferably directly to the position determined last for the person (12) who is to be located.

6. Method according to one of the preceding claims, wherein the determination (S01) of the position of the person (12) who is to be located and the definition of the near zone (30) around the position of the person (12) who is to be located and/or the determination (S04) of the solid angle (32) while the vehicle (10) is located within the near zone (30) are each carried out continuously or at regular intervals and/or at the user's request, wherein that person (12, 14) whose measured distance (d1, d2) for the vehicle (10) corresponds to the calculated distance (dc) within a predetermined tolerance is located by the plausibility-checking operation.

7. Method according to one of the preceding claims wherein using map material which can be made available the near zone (30) continues to be limited in such a way that it comprises only locations from which there is an uninterrupted view of the position determined last for the person (12) who is to be located.

8. Method according to one of the preceding claims, wherein the near zone (30) is defined in accordance with additional parameters which can be made available and which are determined and/or adapted at a user's request and/or on the basis of measurement by means of local vehicle sensor and/or on the basis of vehicle-external information.

9. System for locating one or more persons by means of a vehicle (10), in particular for carrying out a method according to one of the preceding Claims 1 to 8, having:
a first position-determining device (102) which is designed to determine (S01) a position of a person (12) who is to be located;
a second position-determining device (104) which is designed to determine (S03) continuously a current position of the vehicle (10);
a computing device (106) which is designed to define a near zone (30) around the position of the person (12) who is to be located, wherein the near zone (30) is defined at least by a predetermined maximum distance from the position of the person (12) who is to be located; and to determine the solid angle (32) which, starting from the current position of the vehicle (10), comprises the position determined last for the person (12) who is to be located;
a transmission device (108) which is designed to transmit the determined position of the person (12) who is to be located to the computing device (106);
an image collecting device (110) which is designed to record continuous image data which represent the surroundings of the vehicle (10); and
a detection unit (112) which is designed to detect persons (12, 14, 16) at a determined solid angle (32) in the collected image data;
a locating device (114) which is designed to locate, by means of a plausibility-checking operation, the person (12) who is to be located among the persons (12, 14) detected by the detection unit,
- wherein, when the person (12) who is to be located is located (S06), the plausibility-checking operation comprises comparing a respectively measured distance (d1, d2) between, in each case, each of the detected persons (12, 14) and the vehicle (10) with a calculated distance (dc) between the position determined last for the person (12) who is to be located and the current position of the vehicle (10);
- wherein that person (12, 14) who is measured distance (d1, d2) from the vehicle (10) corresponds to the calculated distance (dc) within a predetermined tolerance is located by means of the plausibility-checking operation.

10. System according to Claim 9, in particular for carrying out a method according to Claim 2, having:
an augmented reality-generating device (120) which is designed to generate augmented reality image representations (41, 41'); and
a display device (40; 140) which is designed to display the generated augmented reality image representations (41, 41').

13. System according to one of Claims 9 and 10, in particular for carrying out a method according to Claim 5, having:
a distance-measuring device (130) which is designed to measure at least one distance (d1, d2) between the vehicle (10) and at least one person (12, 14);
wherein the computing device (106) is also designed to calculate a distance between two positions, in particular the distance (dc) between the position of the person (12) who is to be located and the current position of the vehicle (10), and to prepare the calculated distance (dc) with the at least one measured distance (d1, d2).

## Revendications

1. Procédé permettant à un véhicule (10) de localiser une ou plusieurs personnes, comprenant les étapes suivantes :
• au moins une détermination unique (S01) d'une position d'une personne à localiser (12) et la spécification d'une zone proche (30) autour de ladite position, dans lequel la zone proche (30) est définie au moins par une distance maximale prédéterminée par rapport à ladite position ;
• la détermination continue (S02) d'une position actuelle du véhicule (10) ;
• l'enregistrement continu automatique (S03) de données d'image qui représentent un environnement du véhicule (10) tandis que la position actuelle du véhicule (10) à l'intérieur de la zone proche (30), qui a été spécifiée en dernier (S01), est déterminée (S02) ;
• au moins une détermination unique (S04) d'un angle solide (32) qui comprend la position de la personne à localiser (12), qui a été déterminée en dernier (S01), à partir de la position actuelle du véhicule (10) ;
• la détection (S05) de personnes (12, 14) dans l'angle solide (32), qui a été déterminé en dernier, dans les données d'image enregistrées (S03) ;
• la localisation (S06), au moyen d'une opération de contrôle de plausibilité, de la personne à localiser (12) parmi les personnes (12, 14) détectées,
- dans lequel l'opération de contrôle de plausibilité, lors de la localisation (S06) de la personne à localiser (12) comprend une comparaison d'une distance respectivement mesurée (d1, d2) entre chacune des personnes (12, 14) respectivement détectées et le véhicule (10) à une distance calculée (dc) entre la position déterminée en dernier de la personne à localiser (12) et la position actuelle du véhicule (10) ;
- dans lequel la personne (12, 14) dont la distance mesurée (d1, d2) par rapport au véhicule (10) coïncide avec la distance calculée (dc) à une tolérance prédéterminée près est localisée par l'opération de contrôle de plausibilité.

2. Procédé selon la revendication 1, comprenant les étapes suivantes :
• la génération d'une représentation d'image en réalité augmentée (41, 41') sur la base du résultat de la localisation (S06) ; et
• l'affichage de la représentation d'image en réalité augmentée (41, 41') générée au moyen d'un dispositif d'affichage (40 ; 140).

3. Procédé selon la revendication 2, dans lequel la représentation d'image en réalité augmentée (41) générée, dans le cas où la personne à localiser (12) a été localisée dans l'angle solide déterminé en dernier (32), comporte les données d'image enregistrées dans l'angle solide déterminé en dernier (32) et un marquage (42) de la personne localisée (12).

4. Procédé selon l'une des revendications 2 ou 3, dans lequel la représentation d'image en réalité augmentée (41') générée, dans le cas où la personne à localiser (12) n'a pas été localisée de manière univoque dans l'angle solide déterminé en dernier (32), comprend les données d'image enregistrées et un marquage (44) de l'angle solide (32) déterminé et/ou un marquage de toutes les personnes (12, 14) détectées.

5. Procédé selon l'une des revendications précédentes, comprenant l'étape suivante :
la création et l'affichage de données de navigation sur la base des positions déterminées en dernier de la personne à localiser (12) et de la position actuelle du véhicule (10), qui indiquent au conducteur du véhicule (10) de conduire le véhicule (10) dans la zone proche (30) déterminée en dernier, de préférence directement jusqu'à la position déterminée en dernier de la personne à localiser (12).

6. Procédé selon l'une des revendications précédentes, dans lequel la détermination (S01) de la position de la personne à localiser (12) et l'établissement de la zone proche (30) autour de la position de la personne à localiser (12) et/ou, pendant que le véhicule (10) est à l'arrêt à l'intérieur de la zone proche (30), la détermination (S04) de l'angle solide (32) sont respectivement effectués en continu ou à intervalles réguliers et/ou à la demande d'un utilisateur,
dans lequel la personne (12, 14) dont la distance mesurée (d1, d2) par rapport au véhicule (10) coïncide avec la distance calculée (dc) à une tolérance prédéterminée près est localisée par l'opération de contrôle de plausibilité.

7. Procédé selon l'une des revendications précédentes, dans lequel la zone proche (30) est soumise à une restriction supplémentaire en utilisant un contenu cartographique qui peut être fourni de telle manière qu'il ne comprenne que les emplacements à partir desquels il est possible de voir clairement la position déterminée en dernier de la personne à localiser (12).

8. Procédé selon l'une des revendications précédentes, dans lequel la définition de la zone proche (30) est effectuée en fonction de paramètres supplémentaires pouvant être fournis qui sont déterminés et/ou adaptés à la demande d'un utilisateur et/ou sur la base de mesures effectuées au moyen de capteurs de véhicule locaux et/ou sur la base d'informations externes au véhicule.

9. Système permettant à un véhicule (10) de localiser une ou plusieurs personnes, notamment destiné à mettre en œuvre un procédé selon l'une des revendications précédentes 1 à 8, comprenant :
un premier dispositif de détermination de position (102) qui est conçu pour déterminer (S01) une position d'une personne à localiser (12) ;
un second dispositif de détermination de position (104) qui est conçu pour déterminer en continu (S03) une position actuelle du véhicule (10) ;
un dispositif informatique (106) qui est conçu pour spécifier une zone proche (30) autour de la position de la personne à localiser (12), dans lequel la zone proche (30) est définie au moins par une distance maximale prédéterminée par rapport à la position de la personne à localiser (12) ; et pour déterminer un angle solide (32) qui comprend la position déterminée en dernier de la personne à localiser (12), à partir de la position actuelle du véhicule (10) ;
un dispositif de transmission (108) qui est conçu pour transmettre au dispositif informatique (106) la position déterminée de la personne à localiser (12) ;
un dispositif d'enregistrement d'image (110) qui est conçu pour enregistrer en continu des données d'image qui représentent un environnement du véhicule (10) ; et
une unité de détection (112) qui est conçue pour détecter des personnes (12, 14, 16) dans un angle solide (32) déterminé dans les données d'image enregistrées ;
un dispositif de localisation (114) qui est conçu pour localiser, au moyen d'une opération de contrôle de plausibilité, la personne à localiser (12) parmi les personnes (12, 14) détectées par l'unité de détection,
- dans lequel l'opération de contrôle de plausibilité, lors de la localisation (S06) de la personne à localiser (12), comprend une comparaison d'une distance respectivement mesurée (d1, d2) entre chacune des personnes (12, 14) respectivement détectées et le véhicule (10) à une distance calculée (dc) entre la position déterminée en dernier de la personne à localiser (12) et la position actuelle du véhicule (10) ;
- dans lequel la personne (12, 14) dont la distance mesurée (d1, d2) par rapport au véhicule (10) coïncide avec la distance calculée (dc) à une tolérance prédéterminée près est localisée par l'opération de contrôle de plausibilité.

10. Système selon la revendication 9, notamment destiné à mettre en œuvre un procédé selon la revendication 2, comprenant :
un dispositif de génération en réalité augmentée (120) qui est conçu pour générer des représentations d'images en réalité augmentée (41, 41') ; et
un dispositif d'affichage (40 ; 140) qui est conçu pour afficher les représentations d'images en réalité augmentée (41, 41') générées.

13. Système selon l'une des revendications 9 ou 10, notamment destiné à mettre en œuvre un procédé selon la revendication 5, comprenant :
un dispositif de mesure de distance (130) qui est conçu pour mesurer au moins une distance (d1, d2) entre le véhicule (10) et au moins une personne (12, 14) ;
dans lequel le dispositif informatique (106) est en outre conçu pour calculer une distance entre deux positions, notamment la distance (dc) entre la position de la personne à localiser (12) et la position actuelle du véhicule (10), et pour comparer la distance calculée (dc) à ladite au moins une distance mesurée (d1, d2).
